# EUROPÄISCHE PATENTSCHRIFT

(11) **EP 1 442 649 B1**
(45) Veröffentlichungstag und Bekanntmachung des Hinweises auf die Patenterteilung: **07.06.2006**
(21) Anmeldenummer: 04100213.0
(22) Anmeldetag: 22.01.2004
(51) Int. Cl.: A01D 41/12, A01F 12/40

(54) **Mähdrescher mit Strohhäcksler**
Combine and straw chopper
Moissonneuse-batteuse et hache-paille

(30) Priorität: 30.01.2003 DE 10303503
(43) Veröffentlichungstag der Anmeldung: 04.08.2004
(73) Patentinhaber: DEERE & COMPANY, Moline, Illinois 61265-8098 (US)
(72) Erfinder: Weichholdt, Dirk, 57200 Sarreguemines (FR)
(74) Vertreter: Holst, Sönke

(56) Entgegenhaltungen:
- EP-A- 0 727 135
- EP-A- 0 958 727
- US-A- 4 552 547

## Beschreibung

Die Erfindung betrifft einen Mähdrescher mit einer Trenneinrichtung, aus der ein erster Erntegutrestestrom einem Strohhäcksler mit einer sich horizontal und quer zur Fahrtrichtung des Mähdreschers erstreckenden Drehachse zuführbar ist, einer Reinigungseinrichtung, von der dem Strohhäcksler ein zweiter Erntegutrestestrom zuführbar ist, und mit einer Fördereinrichtung zur Förderung des zweiten Erntegutrestestroms von der Reinigungseinrichtung zum Strohhäcksler, die eingerichtet ist, den zweiten Erntegutrestestrom mechanisch zu fördern und in zwei Teilströme aufzuteilen, die dem Strohhäcksler an den beiden Seiten seiner Mittelebene zuführbar sind.

Die EP 0 727 135 A beschreibt einen Mähdrescher, bei dem das Stroh von den Strohschüttlern durch ein Leitblech in einer Langstrohablagebetriebsart in einem Schwad auf dem Boden abgelegt oder in einer Häckselbetriebsart einem Strohhäcksler zugeführt wird, in der es gehäckselt und auf dem Feld verteilt wird. Das Leitblech kann in eine dritte Stellung verbracht werden, in der sowohl das Stroh als auch die Spreu durch den Strohhäcksler geführt werden. Die Spreu wird durch Gebläse von der Reinigung in den Strohhäcksler gefördert.

In der WO 01/01754 A wird ein Mähdrescher mit einem Strohhäcksler und einem Spreuverteiler beschrieben. Der Spreuverteiler ist derart angeordnet, dass er die Spreu stromauf des Strohhäckslers in den Strohstrom einwerfen kann, so dass sie gemeinsam mit dem Stroh den Strohhäcksler durchläuft und etwa über die Arbeitsbreite des Schneidwerks auf dem Feld verteilt wird.

In der DE 100 64 356 A wird vorgeschlagen, die Spreu stets durch den Strohhäcksler zu leiten, während das Stroh entweder im Häckselbetrieb durch den Strohhäcksler geleitet oder im Schwadablagebetrieb an dessen Rückseite vorbeigeleitet und in einem Schwad auf dem Boden abgelegt wird. Im Schwadablagebetrieb werden die Strohleitbleche in eine Stellung gebracht, in der die Spreu beidseits des Schwads über die Arbeitsbreite verteilt wird.

Im Langstrohablagebetrieb werden Spreu und Stroh über die Arbeitsbreite des Felds verteilt. Die Spreu soll durch das Gebläse der Reinigung und die Saugwirkung des Strohhäckslers in letzteren hineingefördert werden.

Ähnliche Anordnungen sind auch aus den Prospekten "Deutz-Fahr Topliner 8XL", Druckvermerk 91 532 01 Printed in Germany 9906, "Case IH Cross-Flow", Druckvermerk CF80-D-BR-10/99, und New Holland CX-Mähdrescher, Druckvermerk Printed in Italy - 01/09 - Satiz Srl (Turin) - Cod. N. 12003/BR/D00 bekannt. Dort wird das Stroh entweder durch den Strohhäcksler gefördert, gehäckselt und über die Arbeitsbreite verteilt, oder an dessen Rückseite vorbeigeführt und in einem Schwad auf dem Feld abgelegt. Die Spreu wird durch Spreuverteilergebläse (Deutz-Fahr), Wurfgebläse-Spreuverteiler (Case IH) oder hydraulisch angetriebene Radialgebläse (New Holland) in den Strohhäcksler gefördert. Da der Strohhäcksler auch im Schwadablagebetrieb arbeitet, wird die Spreu über die Arbeitsbreite verteilt und das Stroh kann ohne Spreuanteil geerntet werden.

Die der WO 01/01754 A vorgeschlagenen Ausführungsformen erlauben durch die Verwendung separater Spreuverteiler eine Vielzahl von Betriebsarten. Allerdings sind die Spreuverteiler relativ kostenaufwändig und schwer. Bei den Ausführungsformen gemäß EP 0 727 135 A, DE 100 64 356 A und den erwähnten Prospekten erübrigen sich die Spreuverteiler, da die Strohhäcksler deren Aufgabe übernehmen. Allerdings sind bei der Ausführungsform nach DE 100 64 356 A Schwierigkeiten bei der Förderung der Spreu zu erwarten, da sie ausschließlich durch das Gebläse der Reinigung und die Saugwirkung des Strohhäckslers in den Strohhäcksler gefördert wird. Die in den erwähnten Prospekten und der EP 0 727 135 A vorgestellten Ausführungsformen nutzen Gebläse zur Förderung der Spreu, bei denen in der Regel der Wirkungsgrad recht gering ist.

In der DE 44 31 802 A wird vorgeschlagen, die Spreu durch einen hin- und herschwingenden Eingabeboden einer horizontalen Förderschnecke zuzuführen, die sie gemeinsam mit dem Stroh einem oder zwei Strohhäckslern mit vertikalen Drehachsen zuführt. Gemäß der US 5 232 405 A dient ein Förderband zur Förderung der Spreu von der Reinigung in einen Strohhäcksler mit horizontaler, quer zur Fahrtrichtung verlaufender Drehachse. Bei den beiden letztgenannten Druckschriften wird keine Möglichkeit offenbart, das Stroh in einem Schwad abzulegen. Somit wird die Spreu stets über die gesamte Schnittbreite verteilt.

In der EP 0 958 727 A wird vorgeschlagen, die von der Reinigung freigegebene Spreu durch eine Querförderschnecke zunächst quer zur Fahrtrichtung nach außen zu fördern. Es entstehen an beiden Seiten des Mähdreschers zwei Teilströme, die durch weitere Förderschnecken nach hinten gefördert und einem Strohhäcksler mit horizontaler, quer zur Fahrtrichtung verlaufender Drehachse axial zugeführt werden. Allerdings ist als nachteilig anzusehen, dass die bei der Abgabe durch den Schneckenförderer bereits vorhandene Geschwindigkeit der Spreu durch die axiale Zuführung zum Strohhäcksler verloren geht, so dass sie allein durch den Strohhäcksler gefördert wird. Die Reichweite und die Streubreite der Spreu ist somit recht gering.

Gemäß der nachveröffentlichten DE 102 56 744 A wird die Spreu durch einen Schwingboden von der Reinigung zum Einlass des Strohhäckslers gefördert. Um zu erreichen, dass die Spreu im Schwadablagebetrieb, in dem das Stroh an der Rückseite des Strohhäckslers entlang geleitet und somit ungehäckselt auf dem Erdboden abgelegt wird, seitlich neben dem Strohschwad abgelegt wird, ist eine entsprechende Verstellung der Strohleitbleche vorgesehen, ähnlich wie bei der DE 100 64 356 A.

Die der Erfindung zu Grunde liegende Aufgabe wird darin gesehen, einen verbesserten Mähdrescher bereitzustellen, bei dem auch die Spreu durch einen Strohhäcksler verteilbar ist, und bei dem die oben erwähnten Nachteile nicht oder in einem verminderten Maß auftreten.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Gemäß der Erfindung ist eine Fördereinrichtung vorgesehen, die den zweiten Erntegutrestestrom von der Reinigung auf mechanische Weise zum Strohhäcksler fördert. Der Strohhäcksler wird um eine horizontale und quer zur Fahrtrichtung des Mähdreschers orientierte Achse in Rotation versetzt. Die Oberfläche der Fördereinrichtung wirkt mechanisch auf die Partikel des zweiten Erntegutrestestroms ein. Sie teilt ihn in zwei Teilströme, die dem Strohhäcksler beidseits seiner Mittelebene zugeführt werden. Dabei wird dem Strohhäcksler der zweite Erntegutstrom durch die Fördereinrichtung in einer quer zu seiner Drehachse orientierten Richtung zugeführt, insbesondere tangential oder radial.

Da die Strömungsrichtung beibehalten wird, vermeidet man eine energieaufwändige Umlenkung des zweiten Erntegutstroms am Einlass des Strohhäckslers. Auf diese Weise ergibt sich eine betriebssichere und energiesparende Förderung des zweiten Erntegutrestestroms in den Strohhäcksler.

Als Fördereinrichtung kommt beispielsweise ein Schwingboden in Frage, der durch einen geeigneten Antrieb in eine hin und her verlaufende Schwingbewegung versetzbar ist, wie sie beispielsweise von Rücklaufböden in Mähdreschern an sich bekannt ist. Die Oberfläche des Schwingbodens kann glatt, aufgeraut oder mit Stufen bzw. sägezähnartigen Erhebungen versehen sein. Es wäre aber auch möglich, als Fördereinrichtung einen beliebigen anderen, nicht auf einer pneumatischen Förderwirkung beruhenden, sondern mechanisch arbeitenden Stetigförderer zu verwenden, wie z. B. einen Becherförderer, Paddelförderer, Kettenförderer, Gurtförderer und/oder einen Schneckenförderer. Diese Fördereinrichtungen sind mit Mitteln zur Aufteilung des zweiten Erntegutstroms versehen, z. B. V- oder pyramidenförmigen Erhebungen oder sich mit dem Förderer bewegenden bzw. am Rahmen des Mähdreschers befestigten Kufen.

Bei einer bevorzugten Ausführungsform ist als Fördereinrichtung eine rotativ angetriebene Fördertrommel vorgesehen. Sie ist in ihrem mittleren Bereich mit geeigneten Führungskufen versehen, die den zweiten Erntegutstrom zu beiden Seiten nach außen fördern. Derartige Führungskufen sind insbesondere V-förmig.

Die Fördereinrichtung ist vorzugsweise eine unterschlächtig arbeitende Ausführungsform, die besonders effizient arbeitet. Es könnte aber auch eine oberschlächtig arbeitende Ausführungsform zur Anwendung kommen.

Der Fördereinrichtung kann der zweite Erntegutstrom von der Reinigungseinrichtung durch einen beliebigen Förderer, z. B. einen Fördergurt, zugeführt werden. Bevorzugt ist jedoch ein Schwingförderer. Die Fördereinrichtung wird vorzugsweise an der Rückseite des Förderers angeordnet.

Die vorliegende Erfindung lässt sich besonders sinnvoll an einem Mähdrescher einsetzen, bei dem der erste Erntegutstrom (d. h. das Stroh) in einer Häckselbetriebsart dem Strohhäcksler zugeführt und in einer Langstrohablagebetriebsart daran vorbeigeleitet wird, in der Regel an der Rückseite des Strohhäckslers. Der zweite Erntegutrestestrom wird bei der Häckselbetriebsart dem Strohhäcksler zugeführt und gemeinsam mit dem ersten Erntegutstrom näherungsweise über die Breite des Schneidwerks über das Feld verteilt. Bei der Langstrohablagebetriebsart wird der zweite Erntegutstrom ebenfalls dem Strohhäcksler zugeführt, um ihn mit einer zum unproblematischen Verlassen des Mähdreschers hinreichenden Geschwindigkeit zu versehen. Der zweite Erntegutstrom kann in der Langstrohablagebetriebsart mit im Schwad abgelegt werden. Er wird in das Strohschwad eingebracht oder darunter abgelegt. Dadurch kann die Spreu gemeinsam mit dem Stroh aufgenommen und verwertet werden.

Bei einer anderen (insbesondere wahlweise möglichen) Betriebsart wird der zweite Erntegutstrom in der Langstrohablagebetriebsart nach dem Durchlaufen des Strohhäckslers über das Feld verteilt. Die erfindungsgemäße Fördereinrichtung, die den Strohhäcksler nur an seinen beiden Seiten, jedoch nicht in seiner Mitte beaufschlagt, ermöglicht es, dass ein Bereich des Strohhäckslers, der den zweiten Erntegutstrom in das Schwad abgeben würde, nicht mit dem zweiten Erntegutstrom beaufschlagt wird. Man erhält auf diese Weise ein Strohschwad, das frei von Spreu und Kaff ist, so dass das Stroh ohne Spreuanteil durch eine Ballenpresse oder dergleichen aufgenommen und der Weiterverarbeitung zugeführt werden kann.

Die Ablage des zweiten und ggf. ersten Erntegutrestestroms kann durch mehrere seitlich nebeneinander angeordnete Strohleitbleche gesteuert werden, die sich stromab des Auslasses des Strohhäckslers befinden. Sie können bewirken, dass die Erntegutreste aus dem Strohhäcksler im Schwad abgelegt oder etwa über die Arbeitsbreite des Schneidwerks des Mähdreschers verteilt werden. Bei einem Langstrohablagebetrieb können sie - aufgrund der fehlenden Beaufschlagung des Strohhäckslers in seinem mittleren Bereich sogar ohne Verstellung der Strohleitbleche gegenüber der Häckselbetriebsart - den zweiten Erntegutrestestrom auch derart weit nach außen ablenken, dass er seitlich neben dem Schwad zu liegen kommt.

In den Zeichnungen ist ein nachfolgend näher beschriebenes Ausführungsbeispiel der Erfindung dargestellt. Es zeigt:
- Fig. 1: eine schematische Seitenansicht eines Mähdreschers mit einem Axialabscheider und einem Strohhäcksler, der zum Ausbringen der Spreu dient,
- Fig. 2: eine seitliche Ansicht der Fördereinrichtung, die in dem Mähdrescher aus Figur 1 die Spreu in den Strohhäcksler fördert,
- Fig. 3a und 3b: eine schematische seitliche Ansicht und Draufsicht auf den Mähdrescher in einem Betriebsmodus, bei dem das Stroh in einem Schwad abgelegt wird, während die Spreu durch den Strohhäcksler über die Arbeitsbreite verteilt wird,
- Fig. 4a und 4b: eine schematische seitliche Ansicht und Draufsicht auf den Mähdrescher in einem Betriebsmodus, bei dem das Stroh in einem Schwad abgelegt wird, während die Spreu durch den Strohhäcksler in das Strohschwad eingebracht wird, und
- Fig. 5a und 5b: eine schematische seitliche Ansicht und Draufsicht auf den Mähdrescher in einem Betriebsmodus, bei dem das Stroh und die Spreu den Strohhäcksler durchlaufen und über die Arbeitsbreite verteilt werden.

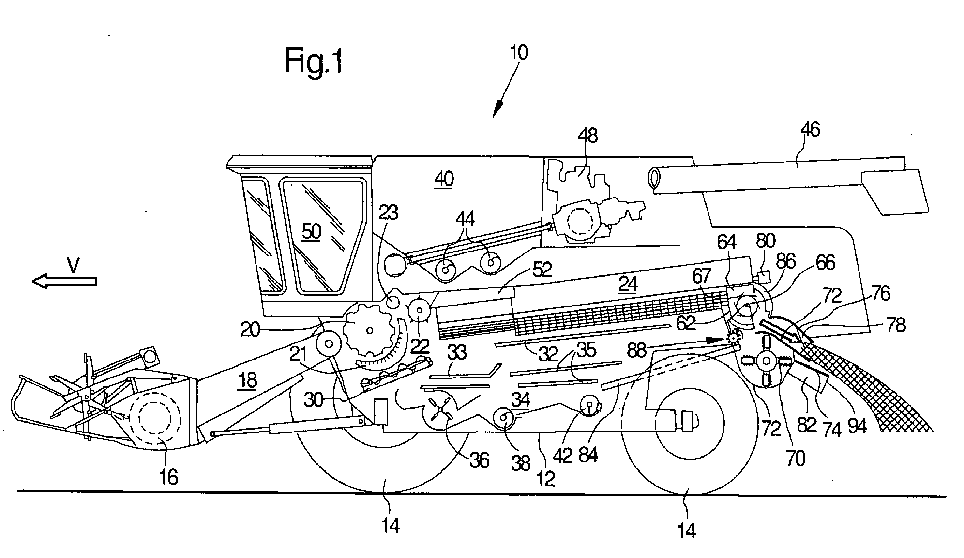

Die Figur 1 zeigt einen selbstfahrenden Mähdrescher 10 mit einem Tragrahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung in Form eines Schneidwerks 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Auch die Verwendung von stromab einer Dreschtrommel angeordneten Strohschüttlern oder Abscheidetrommeln als Abscheidemittel ist denkbar. Eine Abstreifrolle 23 und eine Wendetrommel 22 führen gemeinsam mit einem Zufuhrgehäuse das gedroschene Erntegut von der Dreschtrommel 20 und dem Dreschkorb 21 einem Axialabscheider 24 zu. Der Axialabscheider 24 wird an seiner Rückseite durch ein Getriebe 80 angetrieben. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus dem Axialabscheider 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit darin angeordneten Sieben 35 weiter, der ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Reinigungseinrichtung 34 auf einen sich in einer Schwingbewegung befindlichen Schwingboden 84 ausgeworfen. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus kontrolliert wird. Die verschiedenen Vorrichtungen zum Dreschen, Fördern, Reinigen und Abscheiden befinden sich innerhalb des Tragrahmens 12.

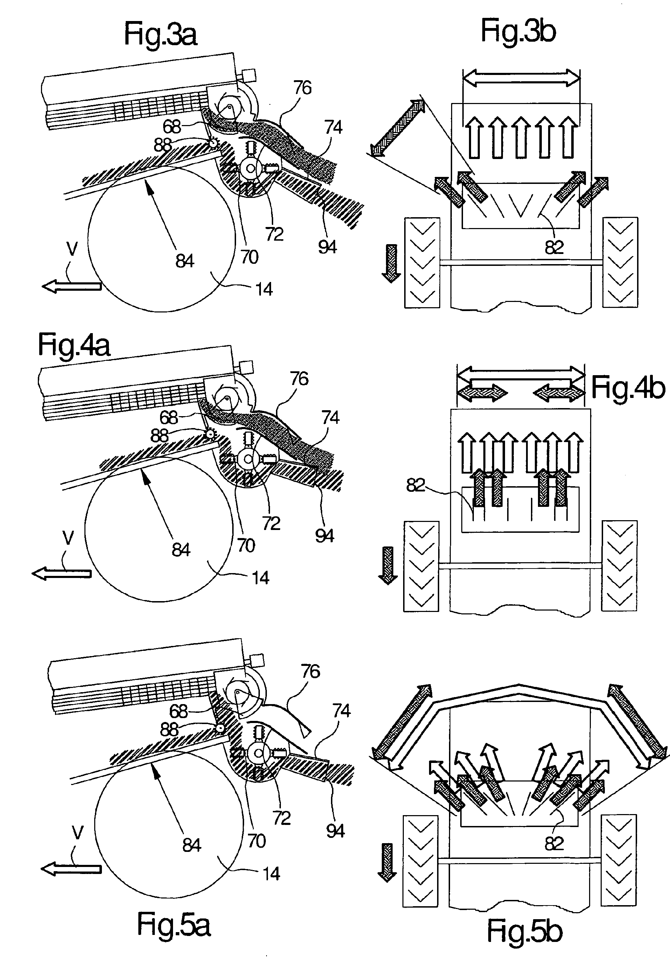

Vom Axialabscheider 24, der als Trenneinrichtung dient (oder einer der anderen oben genannten, alternativ verwendbaren Trenneinrichtungen), wird ein erster Erntegutrestestrom, der im Wesentlichen aus ausgedroschenen Erntegutresten (Stroh) besteht, durch einen Auslass 64 an der Unterseite des rückwärtigen Endes des nach hinten geschlossenen Axialabscheiders 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich quer zur Fahrtrichtung erstreckt, durch einen Antrieb in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der in den Figuren 1, 3a und 4a dargestellten Langstrohablageposition und der in der Figur 5a dargestellten Häckselposition verschwenkt werden.

Unterhalb und geringfügig hinter der Auswurftrommel 66 ist in einem Gehäuse 72 ein an sich bekannter Strohhäcksler 70 angeordnet, der um eine horizontale, quer zur Fahrtrichtung verlaufende Achse (in den Figuren im Gegenuhrzeigersinn) durch einen Antrieb in Drehung versetzbar ist. Er umfasst einen zylindrischen Körper mit pendelnd daran aufgehängten Häckselmessern, die mit im Gehäuse 72 angeordneten stationären Gegenmessern zusammenwirken, um die Erntegutreste zu häckseln und mittels einer mit Strohleitblechen 82 ausgestatteten Strohverteilerhaube 74 etwa über die Schnittbreite des Mähdreschers 10 auf dem Feld zu verteilen. Er kann auch mit Elementen zum Luftschaufeln versehen sein. Ein Teil des Gehäuses 72 erstreckt sich oberhalb des Strohhäckslers 70 vom vorderen Ende der Strohverteilerhaube 74 kreisbogenförmig bis etwa zu einem Punkt oberhalb der Drehachse des Strohhäckslers 70, wie in den Figuren 1, 3a, 4a und 5a dargestellt.

Das Strohleitelement 68 ist in sich konkav (und kreisbogenförmig) gekrümmt und umschließt die Auswurftrommel 66 um einen Winkelbereich von etwa 45° konzentrisch. Es ist an seinen in Querrichtung äußeren Enden schwenkbar am Tragrahmen 12 des Mähdreschers 10 angelenkt. Das Strohleitelement 68 erstreckt sich in der in den Figuren 1, 3a und 4a wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste, d. h. der erste Erntegutstrom, von der Auswurftrommel 66 unterhalb einer Auswurfhaube 76 schräg nach hinten und unten abgegeben werden. Die Auswurfhaube 76 ist - wie die Strohverteilerhaube 74 - an ihrer Unterseite mit Strohleitblechen 78 versehen, um die Breite des Schwads, in der die Erntegutreste abgelegt werden, zu definieren.

Der Schwingboden 84 erstreckt sich vom hinteren, unteren Ende der Reinigungseinrichtung 34 schräg nach hinten und oben bis zu einem Häckslereinlass, der als eine sich über die Breite des Auswurfschachts und des Strohhäckslers 70 erstreckende Öffnung zwischen dem unteren Ende der vorderen Wand 62 des Auswurfschachts und dem oberen Ende des Gehäuses 72 des Strohhäckslers 70 gestaltet ist. Der Schwingboden 84 wird durch geeignete Antriebe, z. B. Exzenter, ähnlich dem Schüttelboden 32 entlang seiner Längsrichtung in eine hin- und hergehende Schwingbewegung versetzt. Da der Schwingboden 84 an seiner Oberseite mit sägezahnförmigen Stufen oder einer anderen geeigneten Oberflächenstruktur versehen ist, wandern die Spreu und andere Kurzstrohanteile, die als zweiter Erntegutrestestrom von der Reinigungseinrichtung 34 an deren hinterem Ende durch die Wirkung des Gebläses 36 und durch die Schwerkraft auf den Schwingboden 84 abgegeben werden, auf dem Schwingboden 84 nach hinten und oben.

Oberhalb des hinteren, oberen Endes des Schwingbodens 84 ist eine Fördereinrichtung 88 in Form einer Fördertrommel angeordnet. Die Fördereinrichtung 88 arbeitet unterschlächtig und steht vorzugsweise mit dem Strohhäcksler 70 in Antriebsverbindung, beispielsweise durch einen Treibriemen. Sie wird mit einer relativ hohen Drehzahl angetrieben, um den zweiten Erntegutstrom mit hoher Geschwindigkeit in das Gehäuse 72 zu fördern und dem Strohhäcksler 70 näherungsweise tangential zuzuführen. Der Strohhäcksler 70 fördert den zweiten Erntegutstrom ohne Umlenkung und somit energiesparend nach hinten und wirft ihn gegen die Strohleitbleche 82.

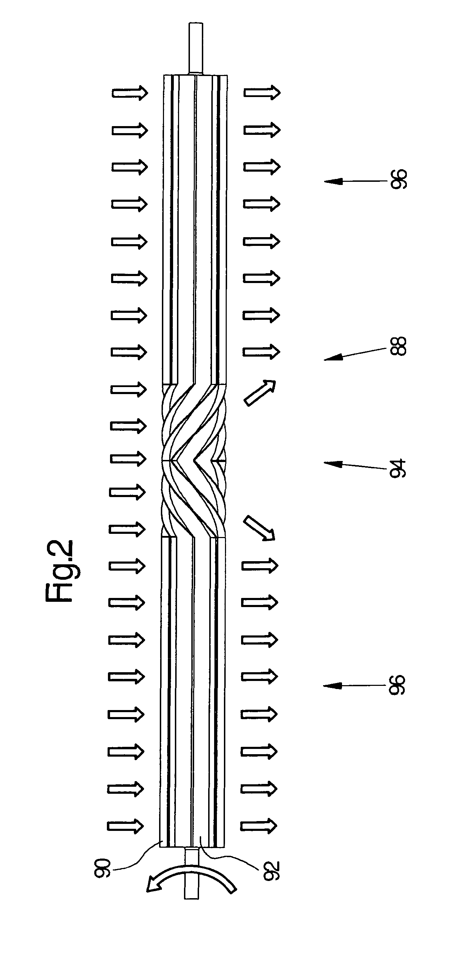

Die Fördereinrichtung 88 ist in der Figur 2 detaillierter dargestellt. Sie ist aus einer Fördertrommel 92 aufgebaut, um deren Umfang radial abstehende Führungskufen 90 verteilt sind. Die Fördereinrichtung 88 weist einen mittigen Abschnitt 96 auf, in dem die Führungskufen 90 in der Draufsicht V-förmig gestaltet sind. In den beiden seitlichen Abschnitten 96 erstrecken sich die Führungskufen 90 hingegen parallel zur Längsachse der Fördertrommel 92. Die Führungskufen 90 haben die Wirkung, dass der zweite Erntegutstrom in den seitlichen Abschnitten 96 nach hinten und unten zum Strohhäcksler 70 hin gefördert wird, ohne seitlich abgelenkt zu werden. Im mittigen Abschnitt 96 wird der zweite Erntegutstrom hingegen durch die V-förmigen Abschnitte der Führungskufen 90 zu beiden Seiten nach außen gefördert.

Die seitliche Verteilung des zweiten Erntegutstroms ist in der Figur 2 durch die Pfeile angedeutet. Vor dem Erreichen der Fördereinrichtung 88 ist der zweite Erntegutstrom über seine Breite homogen verteilt. Die V-förmigen Abschnitte der Führungskufen 90 der Fördertrommel 92 führen den zweiten Erntegutstrom im Bereich des mittigen Abschnitts 96 nach außen, so dass man stromab der Fördereinrichtung 88 zwei getrennte Teilströme des zweiten Erntegutstroms erhält.

Der Strohhäcksler 70 wird auch in der Stellung des Leitblechs 68, wie sie in den Figuren 1, 3a und 4a dargestellt ist, in Drehung versetzt. Er übt eine Förderwirkung auf die Spreu und die Kurzstrohanteile auf, die dazu hinreicht, sie entlang der Strohleitbleche 82 zu fördern und hinter dem Mähdrescher 10 auf dem Feld auszustoßen.

Die Strohleitbleche 82 der Strohverteilerhaube 74 sind um sich quer zu ihren Längsachsen und der Gutflussrichtung erstreckende Achsen 94 schwenkbar an der Strohverteilerhaube 74 angelenkt. Die Schwenkachsen befinden sich in der dargestellten Ausführungsform etwa an den rückwärtigen Enden der Strohleitbleche. Die Verstellung der Strohleitbleche 82 kann manuell oder von der Fahrerkabine 50 aus ferngesteuert durch geeignete Aktoren in Form von Elektro- oder Hydraulikmotoren, insbesondere mit einer Steuerung durch geeignete Sensoren, die selbsttätig das Erreichen der gewünschten Streubreite sicherstellen, erfolgen. Auf diese Weise sind die Strohleitbleche 82 zwischen der in den Figuren 3b und 5b gezeigten Breitablageposition und der in Figur 4b dargestellten Schwadablageposition beweglich.

In der Breitablageposition (Figuren 3b und 5b) weisen die rückwärtigen Enden der Strohleitbleche 82 nach außen. Die mittleren Strohleitbleche 82 legen sich an ihren vorderen Enden jedoch nicht aneinander. Trotzdem wird die Spreu auf beiden Seiten des im Langstrohablagemodus in einem Schwad abgelegten Strohs etwa über die Breite des Schneidwerks 16 verteilt. Da die Führungseinrichtung 88 den zweiten Erntegutstrom in zwei Teilströme getrennt hat, werden die mittleren Strohleitbleche 82 nicht mit dem zweiten Erntegutstrom beaufschlagt, so dass letzterer auch nicht in das Strohschwad gelangt. Wie anhand der Pfeile in Figur 3b erkennbar ist, kann das Stroh ohne Spreuanteil geerntet werden.

In der Schwadablageposition (Figur 4) erstrecken sich die Strohleitbleche 82 in der Vorwärtsfahrtrichtung V des Mähdreschers 10. Die Spreu wird in einem Schwad, dessen Breite etwa der Breite des Strohschwads entspricht, in das Strohschwad eingeblasen, so dass ein Stroh/Spreu-Gemisch im Schwad abgelegt wird, wie anhand der Figuren 4a und 4b erkennbar. Durch manuelles oder motorisches Verschwenken der Strohverteilerhaube 74 um die horizontale, quer zur Vorwärtsfahrtrichtung V verlaufende Achse an ihrem Anlenkpunkt am Gehäuse 72 des Strohhäckslers 70 nach unten könnte die Spreu auch unterhalb des Strohschwads abgelegt werden.

Es wäre im Übrigen auch im Langstrohablagebetrieb denkbar, die Strohleitbleche 82 in eine Stellung zu verbringen, in der die Spreu über das Feld verteilt wird, wobei auch ein Teil der Spreu unter dem Strohschwad zu liegen kommt, indem die Strohleitbleche 82 in eine Stellung verbracht werden, die zwischen den in den Figuren 3b und 4b gezeigten Stellungen liegt.

In der Häckselposition ist das Strohleitelement 68 um die Drehachse der Auswurftrommel 66 (bezüglich der Figur 1 im Uhrzeigersinn) nach hinten verschwenkt, wie in der Figur 5a dargestellt. Dadurch wird zwischen der vorderen Wand 62 und der vorderen Kante des Strohleitelements 68 eine Öffnung freigegeben, durch die die Erntegutreste in den Strohhäcksler 70 gelangen. Das Strohleitelement 68 verlängert in dieser Position die rückwärtige Wand 86 nach unten und vorn. In ihrem Bereich unterhalb der Linie, an der das Strohleitelement 68 zum Anliegen kommt, wenn es sich in der Langstrohablageposition befindet, könnte die vordere Wand 62 ebenfalls mit Leitkufen 84 versehen sein, um den Strohhäcksler 70 möglichst gleichmäßig beschicken zu können. Im Strohhäcksler 70 werden das Stroh und die Spreu gemeinsam gehäckselt und schräg nach hinten und unten ausgeworfen und über die Arbeitsbreite des Schneidwerks 16 über das Feld verteilt, wie anhand der Pfeile in der Figur 5b dargestellt. Die Stellung der Strohleitbleche in Figur 5b ist mit der in Figur 3b gezeigten identisch. Der zweite Erntegutstrom wird im Häckselbetrieb seitlich der Bereiche des Feldes abgelegt, die mit einem Strohschwad belegt werden.

Das Strohleitelement 68 kann durch einen Mechanismus von Hand oder durch geeignete Motore vorzugsweise aus der Fahrerkabine 50 ferngesteuert zwischen der Langstrohablage- und der Häckselposition bewegt werden. Dabei können Knöpfe oder Menüs vorhanden sein, die gleichzeitige Verstellungen des Strohleitelements 68 und der Strohleitbleche 82 ermöglichen, so dass jede der in den Figuren 3, 4 und 5 dargestellten Betriebsstellungen des Strohleitelements 68 und der Strohleitbleche 82 durch Drücken nur eines Knopfes oder Bestätigung der Auswahl nur einer Betriebsart auf einem Bildschirm anwählbar ist.

Anzumerken ist weiterhin, dass der Strohhäcksler 70 durch ein Wurfgebläse ersetzt werden könnte, das ebenfalls eine horizontale, quer zur Fahrtrichtung orientierte Drehachse hat. Ihm wird ein Häcksler zum Zerkleinern des ersten Erntegutstroms vorgeordnet, der beispielsweise am Auslass des Axialabscheiders 24 angeordnet sein könnte.

## Patentansprüche

1. Mähdrescher (10), mit einer Trenneinrichtung, aus der ein erster Erntegutrestestrom einem Strohhäcksler (70) mit einer sich horizontal und quer zur Fahrtrichtung des Mähdreschers (10) erstreckenden Drehachse zuführbar ist, einer Reinigungseinrichtung (34), von der dem Strohhäcksler (70) ein zweiter Erntegutrestestrom zuführbar ist, und mit einer Fördereinrichtung (88) zur Förderung des zweiten Erntegutrestestroms von der Reinigungseinrichtung (34) zum Strohhäcksler (70), die eingerichtet ist, den zweiten Erntegutrestestrom mechanisch zu fördern und in zwei Teilströme aufzuteilen, die dem Strohhäcksler (70) an den beiden Seiten seiner Mittelebene zuführbar sind, **dadurch gekennzeichnet, dass** die Fördereinrichtung (88) eingerichtet ist, dem Strohhäcksler (70) den zweiten Erntegutrestestrom in einer sich quer zu seiner Drehachse erstreckenden Richtung zuzuführen.

2. Mähdrescher (10) nach Anspruch 1, **dadurch gekennzeichnet, dass** die Fördereinrichtung (88) eingerichtet ist, den Strohhäcksler (70) radial bzw. tangential mit dem zweiten Erntegutstrom zu beaufschlagen.

3. Mähdrescher (10) nach Anspruch 1 oder 2, **dadurch gekennzeichnet, dass** die Fördereinrichtung eine Fördertrommel (92) ist, die zumindest in ihrem mittleren Abschnitt (94) nach außen weisende Führungskufen (90) aufweist.

4. Mähdrescher (10) nach Anspruch 3, **dadurch gekennzeichnet, dass** die Fördertrommel (92) in ihrem mittleren Abschnitt (94) V-förmige Führungskufen aufweist.

5. Mähdrescher (10) nach einem der Ansprüche 1 bis 4, **dadurch gekennzeichnet, dass** die Fördereinrichtung (88) unterschlächtig arbeitet.

6. Mähdrescher (10) nach einem der Ansprüche 1 bis 5, **dadurch gekennzeichnet, dass** die Fördereinrichtung (88) am stromabwärtigen Ende eines Schwingbodens (84) angeordnet ist, der den zweiten Erntegutstrom von der Reinigungseinrichtung (34) abfördert.

7. Mähdrescher (10) nach einem der Ansprüche 1 bis 6, **dadurch gekennzeichnet, dass** der erste Erntegutstrom in einer Häckselbetriebsart dem Strohhäcksler (70) zuführbar und in einer Langstrohablagebetriebsart am Strohhäcksler (70) vorbeiführbar und als Schwad auf dem Boden eines Feldes ablegbar ist, und dass der zweite Erntegutstrom in der Häckselbetriebsart und der Langstrohablagebetriebsart dem Strohhäcksler (70) zuführbar ist.

8. Mähdrescher (10) nach Anspruch 7, **dadurch gekennzeichnet, dass** die Fördereinrichtung (88) eingerichtet ist, den Strohhäcksler (70) derart mit dem zweiten Erntegutstrom zu beaufschlagen, dass er in der Langstrohablagebetriebsart außerhalb des Schwads abgelegt wird.

9. Mähdrescher (10) nach einem der Ansprüche 1 bis 8, **dadurch gekennzeichnet, dass** stromab des Strohhäckslers (70) seitlich nebeneinander angeordnete Strohleitbleche (82) angeordnet sind.

10. Mähdrescher (10) nach Anspruch 9, **dadurch gekennzeichnet, dass** der zweite Erntegutrestestrom in der Langstrohablagebetriebsart außerhalb eines Schwads des ersten Erntegutrestestroms abgelegt wird, während der erste Erntegutrestestrom in der Häckselbetriebsart ohne Verstellen der Strohleitbleche (82) gegenüber der Langstrohablagebetriebsart näherungsweise gleichmäßig über die Arbeitsbreite des Mähdreschers (10) verteilt wird.

## Claims

1. Combine harvester (10) comprising:
- a separating assembly from which a first crop residue stream can be fed to a straw chopper (70) having a rotational axis which extends horizontally and transversely with respect to the direction of travel of the combine harvester (10),
- a cleaning assembly (34), from which a second crop residue stream can be fed to the straw chopper (70), and
- a conveyor device (88) for conveying the second crop residue stream from the cleaning assembly (34) to the straw chopper (70) and which is designed to convey the second crop residue stream mechanically and divide it into two partial streams which can be fed to the straw chopper (70) at the two sides of its centre plane,
**characterised in that** the conveyor device (88) is designed to feed the second crop residue stream to the straw chopper (70) in a direction extending perpendicular to the rotational axis of the straw chopper.

2. Combine harvester (10) according to claim 1, **characterised in that** the conveyor device (88) is designed to load the straw chopper (70) with the second crop residue stream radially or tangentially.

3. Combine harvester (10) according to claim 1 or 2, **characterised in that** the conveyor device is a conveyor drum (92) which at least in its centre section (94) has guidance skids (90) pointing outwards.

4. Combine harvester (10) according to claim 3, **characterised in that** the conveyor drum (92) has V-shaped guidance skids in its centre section (94).

5. Combine harvester (10) according to one of claims 1 to 4, **characterised in that** the conveyor device (88) operates in an undershot manner.

6. Combine harvester (10) according to one of claims 1 to 5, **characterised in that** the conveyor device (88) is arranged at the downstream end of an oscillating pan (84) which conveys the second crop stream from the cleaning assembly (34).

7. Combine harvester (10) according to one of claims 1 to 6, **characterised in that** the first crop stream can be fed to the straw chopper (70) in a chopping mode and can be guided past the straw chopper (70) in a straw swath deposition mode and be deposited as a swath on the ground of a field, and **in that** the second crop stream can be fed to the straw chopper (70) in the chopping mode and the straw swath deposition mode.

8. Combine harvester (10) according to claim 7, **characterised in that** the conveyor device (88) is designed so to load the straw chopper (70) with the second crop stream that it is deposited outside the swath in the straw swath deposition mode.

9. Combine harvester (10) according to one of claims 1 to 8, **characterised in that** straw guide plates (82) are arranged side by side downstream from the straw chopper (70).

10. Combine harvester (10) according to claim 9, **characterised in that** in the straw swath deposition mode the second crop residue stream is deposited outside a swath of the first crop residue stream, whilst in the chopping mode the first crop residue stream is distributed approximately uniformly over the working width of the combine harvester (10) without adjusting the straw guide plates (82) relative to the straw swath deposition mode.

## Revendications

1. Moissonneuse-batteuse (10), avec un dispositif de séparation hors duquel un premier courant de résidus de récolte peut être envoyé à un hache-paille (70) avec un axe de rotation s'étendant horizontalement et transversalement à la direction de déplacement de la moissonneuse-batteuse (10), un dispositif de nettoyage (34), hors duquel un deuxième courant de résidus de récolte peut être envoyé au hache-paille (70), et avec un dispositif de transport (88) pour transporter le deuxième courant de résidus de récolte du dispositif de nettoyage (34) au hache-paille (70), qui est construit de façon à transporter mécaniquement le deuxième courant de résidus de récolte et de le diviser en deux courants partiels, qui peuvent être envoyés au hache-paille (70) de part et d'autre de son plan médian, **caractérisée en ce que** le dispositif de transport (88) est construit de façon à envoyer le deuxième courant de résidus de récolte au hache-paille (70) dans une direction s'étendant transversalement à son axe de rotation.

2. Moissonneuse-batteuse (10) selon la revendication 1, **caractérisée en ce que** le dispositif de transport (88) est construit de façon à alimenter le hache-paille (70) radialement ou tangentiellement avec le deuxième courant de résidus de récolte.

3. Moissonneuse-batteuse (10) selon la revendication 1 ou 2, **caractérisée en ce que** le dispositif de transport est un tambour de transport (92), qui comprend au moins dans sa partie centrale (94) des lames de guidage (90) orientées vers l'extérieur.

4. Moissonneuse-batteuse (10) selon la revendication 3, **caractérisée en ce que** le tambour de transport (92) présente des lames de guidage en forme de V dans sa partie centrale (94).

5. Moissonneuse-batteuse (10) selon l'une quelconque des revendications 1 à 4, **caractérisée en ce que** le dispositif de transport (88) travaille avec un entraînement par le dessous.

6. Moissonneuse-batteuse (10) selon l'une quelconque des revendications 1 à 5, **caractérisée en ce que** le dispositif de transport (88) est disposé à l'extrémité aval d'un plateau oscillant (84), qui transfère le deuxième courant de résidus de récolte depuis le dispositif de nettoyage (34).

7. Moissonneuse-batteuse (10) selon l'une quelconque des revendications 1 à 6, **caractérisée en ce que** le premier courant de résidus de récolte peut être envoyé au hache-paille (70) dans un premier mode de fonctionnement de hachage et peut contourner le hache-paille (70) dans un mode de fonctionnement de dépôt de paille longue et peut être déposé sous forme d'andain sur le sol d'un champ, et **en ce que** le deuxième courant de résidus de récolte peut être envoyé au hache-paille (70) dans le mode de fonctionnement de hachage et dans le mode de fonctionnement de dépôt de paille longue.

8. Moissonneuse-batteuse (10) selon la revendication 7, **caractérisée en ce que** le dispositif de transport (88) est construit de façon à alimenter le hache-paille (70) avec le deuxième courant de résidus de récolte de telle manière qu'il soit déposé à l'extérieur de l'andain dans le mode de fonctionnement de dépôt de paille longue.

9. Moissonneuse-batteuse (10) selon l'une quelconque des revendications 1 à 8, **caractérisée en ce que** des déflecteurs de paille (82) sont disposés latéralement l'un à côté de l'autre en aval du hache-paille (70).

10. Moissonneuse-batteuse (10) selon la revendication 9, **caractérisée en ce que** le deuxième courant de résidus de récolte est déposé, dans le mode de fonctionnement de dépôt de paille longue, à l'extérieur d'un andain du premier courant de résidus de récolte, tandis que le premier courant de résidus de récolte dans le mode de fonctionnement de hachage est réparti approximativement de manière uniforme sur la largeur de travail de la moissonneuse-batteuse (10) sans déplacement des déflecteurs de paille (82) par rapport au mode de fonctionnement de dépôt de paille longue.
